# FASCICULE DE BREVET EUROPEEN

(11) **EP 2 159 734 B1**
(45) Date de publication et mention de la délivrance du brevet: **01.05.2019**
(21) Numéro de dépôt: 09176804.4
(22) Date de dépôt: 01.12.2003
(51) Int. Cl.: G06K 7/00, H05K 5/02

(54) **Adaptateur pour la connexion électrique d'une mini-carte à circuit(s) intégré(s) dans un connecteur pour carte à mémoire**
Speicherkartenadapter zur Verbindung einer Miniaturkarte mit einem Standardkartenverbinder
Memory card adapter for connecting mini-card in larger connector

(30) Priorité: 05.12.2002 FR 0215336
(43) Date de publication de la demande: 03.03.2010
(62) Demande divisionnaire de: 03789532.3
(73) Titulaire: Gemalto SA, 92190 Meudon (FR)
(72) Inventeur: Calvas, Bernard, 13011, MARSEILLE (FR); Chomette, Michel, 13122, Ventabren (FR); Elbaz, Didier, 13010, MARSEILLE (FR); Patrice, Philippe, 13011, MARSEILLE (FR)
(74) Mandataire: Milharo, Emilien

(56) Documents cités:
- EP-A- 1 004 979
- US-A- 6 075 706

## Description

La présente invention concerne un adaptateur pour la connexion électrique d'une mini-carte à circuit(s) intégré(s) dans un connecteur.

La présente invention concerne plus particulièrement un adaptateur pour la connexion électrique d'une mini-carte à circuit(s) intégré(s) dans un connecteur principal pour carte à mémoire électronique à circuit(s) intégré(s) à contact d'un encombrement supérieur à la mini-carte, la mini-carte comportant des pistes de contact en surface et ledit adaptateur comportant un corps principal apte à se connecter au connecteur principal et un logement de réception de la mini-carte débouchant à la surface du corps principal et comportant à l'intérieur des plots de raccordement aux contacts électriques de la mini-carte.

Actuellement, de plus en plus d'appareils utilisent des cartes à mémoire électronique de type normalisé, qui permettent notamment un stockage important de données pour constituer ainsi un support amovible de données qui est globalement de petites dimensions et de grande capacité de stockage. On connaît plusieurs exemples de réalisation d'un tel type de carte à mémoire dont les dimensions sont de plus en plus réduites et dont les capacités de stockage sont de plus en plus importantes.

C'est notamment le cas de la carte dite "MMC" (MultiMediaCard) commercialisée par la société SANDISK et dont les dimensions de son corps contenant les circuits intégrés et le positionnement de ses plages conductrices de contact sont définis de manière précise par son fabricant et par une association d'utilisateurs afin de disposer d'une définition de type normalisé d'une telle carte. Cette définition fait par exemple l'objet de la publication « MultiMediaCard System Spécification Version 2.11 Official Release @ June 1999 MMCA ».

Une autre carte à mémoire à grande capacité de stockage, appelée carte "SD" (Secure Digital), est commercialisée par la société SANDISK.

L'ensemble des caractéristiques et des performances des cartes SD est défini par les documents émis par la SDCA (SD Card Association) dont l'adresse est 53 Muckelemi St. P.O.Box 189, San Juan Baustista, CA 95045-0189 - USA.

Les dimensions globales des cartes MMC et SD sont identiques, à l'exception de l'épaisseur de la carte SD qui est augmentée.

Une autre carte à mémoire dite carte "MS" (Memory Stick) est commercialisée par la société SONY.

L'ensemble des caractéristiques et des performances de la carte MS est défini dans le document publié par la société Sony Corporation et intitulé « Memory Stick Standard - Memory Stick Duo Format Spécifications ver. 1.0 - August 2001 ».

Ces différents formats de cartes à mémoire ont tous une forme générale rectangulaire, avec des plages conductrices longitudinales qui sont agencées sur ou dans l'une des faces principales parallèles et au voisinage d'un bord transversal de la carte.

On a constaté que l'encombrement extérieur de chacun de ces formats de carte à mémoire est supérieur à l'encombrement extérieur d'une mini-carte à circuit(s) intégré(s) normalisée du type mini-SIM (SIM signifiant « Subscriber Identification Module »), qui est une carte de petites dimensions couramment utilisée dans le domaine de la radiotéléphonie comme support de stockage de données, en particulier de données d'identification de l'utilisateur de la mini-carte.

La demande de brevet US 6075706 A1 décrit une carte du type PCMCIA ou PC carte. Elle comprend une carte de circuit imprimé rigide comprenant implicitement des composants électroniques et qui reçoit un bloc de connecteur soudé sur le circuit imprimé. Entre la carte et l'extérieur se trouvent au moins un bloc de connecteur, un circuit imprimé portant des composants électronique et une paroi externe.

La demande de brevet EP 1004979 A1 décrit également une carte du type PC carte comme ci-dessus. Elle a implicitement une construction du même type (avec un circuit imprimé doté d'un bloc de connecteur).

L'invention vise à proposer un adaptateur permettant de connecter une mini-carte dans un connecteur prévu pour recevoir une carte à mémoire normalisée à grande capacité de stockage.

A cet effet, l'invention propose un adaptateur pour la connexion d'une mini-carte à un connecteur principal pour carte à mémoire électronique, selon la revendication 1.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un premier mode de réalisation d'un adaptateur conforme aux enseignements de l'invention et une mini-carte avant sa mise en place dans l'adaptateur ;
- la figure 2 est une vue en coupe longitudinale qui représente schématiquement l'adaptateur de la figure 1 lorsque la mini-carte occupe sa position de connexion à l'intérieur de l'adaptateur, le capot de l'adaptateur étant en position fermée ;
- la figure 3 est une vue similaire à celle de la figure 2 qui représente un deuxième mode de réalisation de l'adaptateur selon l'invention ;
- les figures 4 à 7 sont des vues similaires à celle de la figure 2 qui illustrent plusieurs étapes du procédé de fabrication de l'adaptateur de la figure 3 ;
- la figure 8 est une vue similaire à celle de la figure 2 qui représente un troisième mode de réalisation de l'adaptateur selon l'invention ;
- la figure 9 est une vue similaire à celle de la figure 2 qui représente un quatrième mode de réalisation de l'adaptateur selon l'invention.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

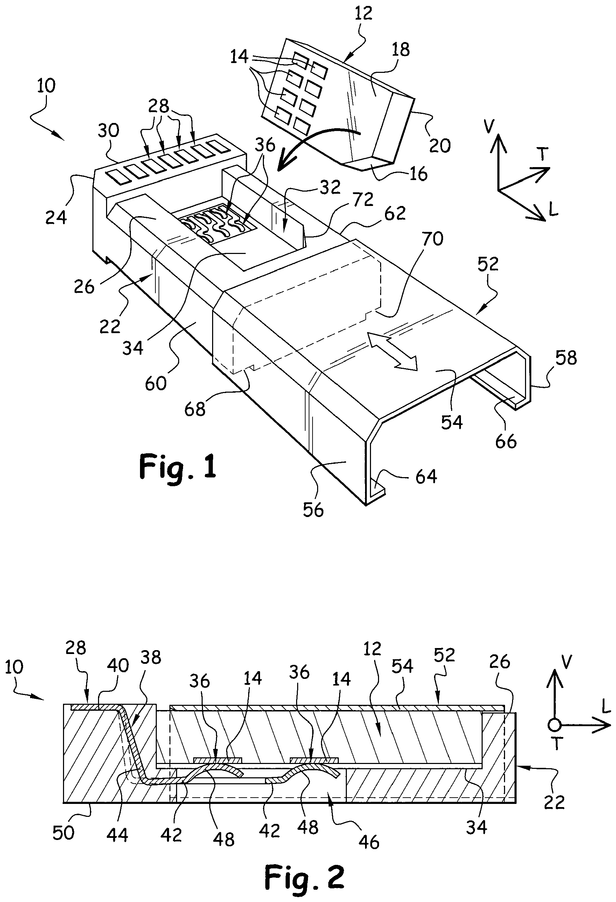

On a représenté sur les figures 1 et 2 un premier mode de réalisation d'un adaptateur 10 qui est réalisé conformément aux enseignements de l'invention.

Sur la figure 1, on a donc représenté un adaptateur 10 pour la connexion électrique d'une mini-carte 12 à circuit(s) intégré(s) dans un connecteur principal prévu pour recevoir une carte à mémoire électronique à circuit(s) intégré(s) à contact, ici une carte du type MMC.

Le connecteur principal, qui n'a pas été représenté ici, est un connecteur conventionnel apte à recevoir de manière complémentaire une carte à mémoire électronique du type MMC, de manière à permettre à un appareil relié électriquement au connecteur de traiter les données stockées dans ladite carte.

Pour connaître les caractéristiques détaillées de la carte à mémoire électronique du type MMC, on peut se reporter au document « MultiMediaCard System Spécification Version 2.11 Official Release @ June 1999 MMCA », déjà cité.

Les dimensions normalisées d'une carte MMC sont les suivantes : dimension longitudinale (longueur) de 32 mm, dimension transversale (largeur) de 24 mm, et dimension verticale (épaisseur) de 1,4 mm. L'encombrement extérieur de l'adaptateur 10 doit donc respecter ces dimensions.

Bien entendu, la présente invention ne se limite pas à ce format de carte à mémoire, mais elle s'applique à tout format de carte à mémoire dont les dimensions sont compatibles avec l'utilisation d'une mini-carte.

En particulier, l'invention s'applique à un adaptateur 10 dans lequel la mini-carte 12 s'étend en partie à l'extérieur du corps principal de l'adaptateur.

La mini-carte 12 est ici de format normalisé du type mini-SIM, qui correspond à la norme AFNOR CEN/TC 224N 406 du 10 mai 1993. Une telle mini-carte 12 est parfois désignée par le terme « plug-in » dans le domaine des cartes à puce.

Bien entendu, la présente invention ne se limite pas aux mini-cartes de type mini-SIM, mais elle s'applique à tout type de support de données à circuit(s) intégré(s) d'encombrement globalement inférieur à celui de la carte à mémoire électronique concernée, et comportant des pistes de contact 14 pour sa connexion électrique.

La mini-carte 12 a une forme générale rectangulaire qui comporte un pan coupé 16 ayant une fonction de détrompage qui sera expliquée par la suite.

La mini-carte 12 comporte deux faces principales planes 18, 20 dont l'une (18) est munie de pistes de contact 14, et elle comporte, dans son épaisseur, des circuits intégrés ou puces (non représentés).

L'adaptateur 10 comporte un corps principal 22 en forme de carte à mémoire électronique, ici en forme de carte MMC.

Bien entendu, selon des variantes de réalisation (non représentées) de l'invention, l'adaptateur 10 peut prendre la forme d'un autre type de carte à mémoire électronique normalisée, notamment la forme d'une carte normalisée du type Secure Digital, ou la forme d'une carte normalisée du type Memory Stick.

Le corps principal 22 a ici une forme générale rectangulaire qui comporte un pan coupé de détrompage 24 correspondant au pan coupé prévu dans le format de carte MMC.

Le corps 22 est réalisé dans une matière isolante, par exemple une matière plastique.

La face principale supérieure 26 du corps 22 est munie de plages conductrices 28 longitudinales parallèles qui sont agencées au voisinage d'un bord transversal du corps 22, ou bord de connexion 30.

Le corps 22 délimite, dans son épaisseur, un logement 32 complémentaire de la mini-carte 12 qui débouche ici dans la face principale supérieure 26 du corps 22 pour permettre la mise en place de la mini-carte 12.

Le logement 32 comporte une paroi de fond, ou paroi de raccordement 34, qui est sensiblement parallèle à la face supérieure 26 du corps 22 et qui est munie de plots de raccordement 36.

Les plots de raccordement 36 sont agencés dans la paroi de raccordement 34 de manière qu'il soient en contact respectivement avec les pistes de contact 14 de la mini-carte 12, lorsque la mini-carte 12 occupe sa position de raccordement électrique dans le logement 32, ou position de connexion.

Chaque plot de raccordement 36 est relié électriquement à une plage conductrice 28 associée de l'adaptateur 10.

Selon le premier mode de réalisation représenté ici, en considérant notamment la figure 2, le corps 22 comporte une série de lames métalliques conductrices 38 qui comportent chacune un premier tronçon d'extrémité 40 constituant une plage conductrice 28 et un second tronçon d'extrémité 42 constituant un plot de raccordement 36 associé.

Le premier tronçon d'extrémité 40 de chaque lame 38 s'étend sensiblement longitudinalement sur la face supérieure 26 du corps 22 au voisinage du bord de connexion 30 de l'adaptateur 10, et le second tronçon d'extrémité 42 s'étend sensiblement longitudinalement sous la paroi de raccordement 34 du logement 32.

Avantageusement, le corps 22 est moulé autour des lames conductrices 38.

Chaque lame 38 comporte, entre le premier 40 et le second 42 tronçons d'extrémité, un tronçon intermédiaire 44 qui s'étend ici suivant une direction globalement verticale, et qui est noyé dans le corps 22 en matière plastique.

Avantageusement, la paroi de raccordement 34 du logement 32 comporte, en regard des pistes de contact 14 de la mini-carte 12, une cavité 46 dans laquelle le second tronçon d'extrémité 42 de chaque lame s'étend globalement longitudinalement, en formant un bossage 48 en saillie à l'intérieur du logement 32.

La cavité 46 a ici la forme d'une fenêtre rectangulaire qui débouche en haut dans la paroi de raccordement 34 du logement 32 et en bas dans la face principale inférieure 50 du corps 22.

Un tel agencement des lames 38 dans la cavité 46 permet d'exploiter leurs propriétés élastiques pour assurer le contact électrique entre chaque plot de raccordement 36 et la piste de contact 14 associée de la mini-carte 12. En effet, lorsqu'une mini-carte 12 est mise en place dans le logement 32, elle vient en appui, par ses pistes de contact 14, contre les bossages 48 des lames 38, ce qui provoque le fléchissement vers le bas du second tronçon d'extrémité 42 de chaque lame 38, à l'encontre de la force de rappel élastique qui sollicite le second tronçon d'extrémité 42 vers le haut.

De manière avantageuse, les lames métalliques conductrices 38 sont réalisées à partir de grilles formées et découpées, selon une technologie similaire à celle utilisée dans le domaine des cartes à puces.

Conformément aux enseignements de l'invention, un capot mobile 52 est monté sur le corps 22 de l'adaptateur 10.

Le capot 52 est susceptible d'occuper une position de fermeture sur le corps 22, dans laquelle il ferme au moins partiellement le logement 32, de manière à retenir la mini-carte 12 en position de connexion, ou position de raccordement électrique par contact, dans le logement 32, et de manière à rigidifier la structure globale de l'adaptateur 10.

De préférence, le capot 52 est monté à coulissement suivant une direction longitudinale sur le corps 22.

Bien entendu, selon des variantes de réalisation (non représentées) de l'invention, le capot 52 peut être monté sur le corps 22 de manière différente, par exemple par emboîtement ou « clipsage », par collage, par crochetage au moyen d'éléments de verrouillage manipulés par l'utilisateur.

Selon le mode de réalisation représenté ici, le capot 52 a globalement la forme d'un profilé en U renversé comportant une plaque principale transversale 54 et deux ailes latérales longitudinales 56, 58, qui sont sensiblement parallèles aux faces verticales longitudinales 60, 62 du corps 22.

Chaque aile latérale 56, 58 est munie, à son extrémité inférieure, d'un retour 64, 66 qui est contenu dans un plan sensiblement transversal longitudinal et qui vient en appui contre une portion de la face principale inférieure 50 du corps 22, de manière à guider le capot 52 en coulissement longitudinal par rapport au corps 22.

Selon le mode de réalisation représenté ici, la face principale inférieure 50 du corps 22 comporte deux épaulements longitudinaux 68, 70 sensiblement complémentaires des retours 64, 66 du capot 52, de manière à faciliter le guidage longitudinal et la retenue du capot 52 sur le corps 22, et de manière que l'encombrement extérieur de l'adaptateur 10, en tenant compte du capot 52, corresponde à l'encombrement extérieur d'une carte MMC.

Le capot 52 permet de rigidifier la structure de l'adaptateur 10 en même temps qu'il maintient la mini-carte 12 en appui contre les plots de raccordement 36, c'est à dire en position de connexion dans le logement 32.

La rigidité du capot 52 permet notamment de compenser la souplesse du corps 22 et de la mini-carte 12 qui sont réalisés en matière plastique.

De préférence, le capot 52 est réalisé en métal, ce qui lui confère une rigidité adéquate.

Selon une variante de réalisation (non représentée), le capot 52 peut être réalisé dans un matériau non métallique ayant des caractéristiques de rigidité appropriées.

Avantageusement, le capot 52 n'est pas lisse ou plan en surface mais il est « profilé » de manière à augmenter sa rigidité, ce qui lui confère des propriétés améliorées de tenue mécanique et d'appui contre la mini-carte 12.

Par exemple, la plaque principale 54 du capot 52 peut comporter des embossages (non représentés) convexes vers le logement 32, ce qui permet d'augmenter la rigidité du capot 52, donc la rigidité de l'appui vertical de la plaque principale 54 contre la mini-carte 12, de manière à maintenir la mini-carte 12 en appui vers la paroi de raccordement 34 en vue d'assurer un bon raccordement électrique par contact entre les plots de raccordement 36 et les pistes de contact 14.

Avantageusement, la plaque principale 54 forme avec au moins une des ailes latérales 56, 58 un angle légèrement inférieur à l'angle formé par l'arête correspondante du corps 22, ce qui crée une ligne de contrainte dans le capot 52 qui renforce sa rigidité.

Le fonctionnement de l'adaptateur 10 est le suivant.

La mini-carte 12 est d'abord mise en place dans le logement 32, selon une direction sensiblement perpendiculaire au plan du corps 22. La mini-carte 12 occupe alors sa position de connexion dans l'adaptateur 10, chacune de ses pistes de contact 14 étant raccordée électriquement à une plage conductrice 28 de l'adaptateur 10.

Lors de cette mise en place, la face principale 18 de la mini-carte 12 comportant les pistes de contact 14 est agencée en regard de la face de raccordement 34.

Dans le mode de réalisation représenté ici, aucun autre positionnement de la mini-carte 12 dans le logement 32 n'est possible, grâce à la présence du pan coupé de détrompage 16 sur la mini-carte 12, et grâce à la forme du logement 32 qui comporte un pan coupé de détrompage 72 complémentaire de celui de la mini-carte 12.

Après la mise en place de la mini-carte 12, le capot 52 est déplacé à coulissement longitudinal sur le corps 22 jusqu'à une position fermée dans laquelle la plaque principale 54 recouvre l'ouverture du logement 32, ce qui maintient la mini-carte 12 dans le logement 32, en appui vertical contre la paroi de raccordement 34.

L'ensemble formé par l'adaptateur 10 et la mini-carte 12 en position de connexion peut alors être inséré dans un connecteur prévu pour une carte MMC, ce qui permet au connecteur de traiter les données stockées dans la mini-carte 12.

On note qu'une mini-carte 12 comporte généralement au maximum huit pistes de contacts 14, de sorte qu'elle ne peut être montée que dans un adaptateur 10 du type qui comporte au maximum huit plages conductrices 28 actives correspondant aux pistes de contact de la mini-carte 12.

Bien entendu, le raccordement électrique entre les plages conductrices 28 et les pistes de contact 14 est nécessaire uniquement pour les pistes de contact 14 qui sont actives et qui sont nécessaires au connecteur pour permettre le traitement des données stockées dans la mini-carte 12.

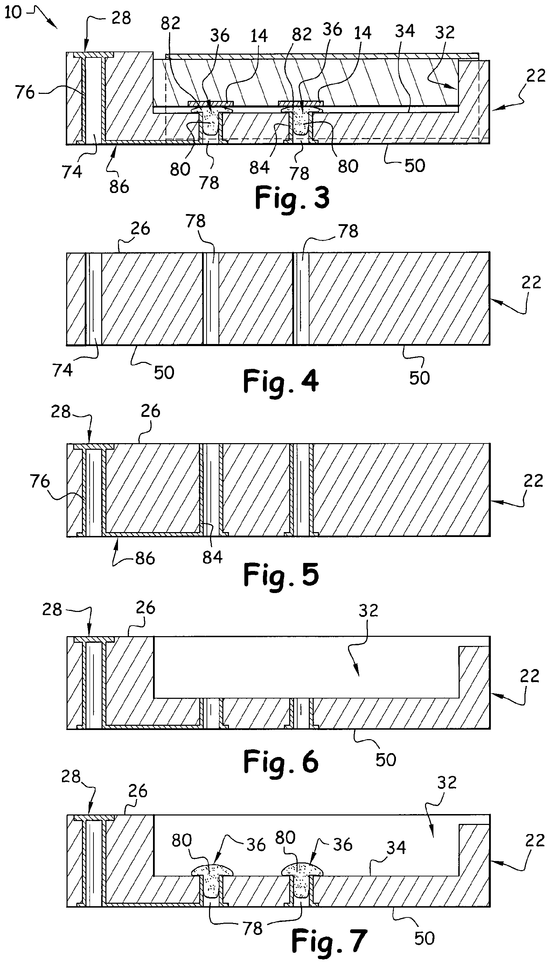

On a représenté, sur la figure 3, un deuxième mode de réalisation d'un adaptateur 10 conforme aux enseignements de l'invention.

L'adaptateur 10 selon le deuxième mode de réalisation se distingue du premier par le mode de réalisation des plages conductrices 28 et des plots de raccordement 36, ainsi que par le mode de réalisation du raccordement électrique entre les plages 28 et les plots 36. En effet, les plages conductrices 28 et les plots de raccordement 36, ainsi que les liaisons électriques entre les plages et les plots, sont réalisés en faisant appel à une technologie connue pour la réalisation de circuits imprimés.

Ainsi, les plages conductrices 28 sont réalisées, sur la face principale supérieure 26 du corps 22, par dépôt et gravure d'une couche de matière conductrice, par exemple à base de cuivre.

Chaque plage conductrice 28 est agencée au droit d'un puits vertical de connexion 74, ou via conductrice, qui s'étend entre la face principale supérieure 26 et la face principale inférieure 50 du corps 22.

La paroi de chaque puits de connexion 74 est revêtue d'une couche 76 de matière conductrice, par exemple la même matière que celle qui est utilisée pour réaliser les plages conductrices 28, de manière à relier électriquement chaque plage conductrice 28 avec la face principale inférieure 50 du corps 22.

Chaque plot de raccordement 36 est agencé au droit d'un puits vertical de connexion 78, qui s'étend entre la paroi de raccordement 34 du logement 32 et la face principale inférieure 50 du corps 22.

Une pellicule 80 de matière élastique conductrice ou colle conductrice, par exemple du silicone chargé de particules métalliques, est déposée dans chaque puits de connexion 78. La colle conductrice forme un « amas » dans chaque puits de connexion 78 et elle « déborde » du côté de la paroi de raccordement 34 de manière à former une bosse 82, proéminente à l'intérieur du logement 32, qui constitue un plot de raccordement 36.

La paroi de chaque puits de connexion 78 associé à un plot de raccordement 36 est ici revêtue d'une couche 84 de matière conductrice, par exemple la même matière que celle qui est utilisée pour réaliser les plages conductrices 28.

Comme la colle conductrice 80 constituant chaque plot de raccordement 36 est en contact avec la couche 84 de matière conductrice tapissant la paroi du puits de connexion 78 associé, chaque puits de connexion 78 permet de relier électriquement le plot 36 associé avec la face principale inférieure 50 du corps 22.

La face principale inférieure 50 du corps 22 comporte une série de pistes conductrices 86 qui sont réalisées par exemple de la même manière que les plages conductrices 28, par dépôt et gravure d'une couche de matière conductrice à base de cuivre.

Ces pistes conductrices 86 sont agencées sur la face principale inférieure 50 du corps 22 de manière à relier électriquement l'extrémité inférieure de chaque puits de connexion 74, associé à une plage conductrice 28, à l'extrémité inférieure de chaque puits de connexion 78, associé à un plot de raccordement 36 correspondant.

Les pistes conductrices 86 et les puits de connexion 74, 78 permettent donc de relier électriquement chaque plage conductrice 28 au plot de raccordement 36 correspondant.

L'élasticité de la colle conductrice 80 formant chaque plot de raccordement 36 permet de garantir la liaison électrique par contact entre chaque plot de raccordement 36 et la piste de contact 14 associée de la mini-carte 12, ceci malgré d'éventuels défauts de co-planéité entre la face de raccordement 34 du logement 32 et la face 18 en vis-à-vis de la mini-carte 12. En effet, lors de la mise en place de la mini-carte 12 dans le logement 32, les pistes de contact 14 viennent en appui verticalement contre les plots de raccordement 36 associés, en provoquant un léger écrasement de ces plots 36, par déformation élastique, ce qui compense les défauts de co-planéité.

Le fonctionnement de l'adaptateur 10 selon le deuxième mode de réalisation est similaire au fonctionnement de l'adaptateur 10 selon le premier mode de réalisation.

Sur les figures 4 à 7, on a représenté plusieurs étapes intermédiaires d'un exemple de procédé pour la fabrication de l'adaptateur 10 selon le deuxième mode de réalisation.

Au cours d'une première étape, qui est illustrée par la figure 4, on réalise le corps 22 en matière isolante, par exemple par moulage de matière plastique.

Les puits de connexion 74, 78 peuvent être réalisés au cours de cette première étape, par exemple par perçage.

Au cours d'une deuxième étape, qui est illustrée par la figure 5, une couche de matière conductrice, par exemple du cuivre, est déposée sur les faces supérieure 26 et inférieure 50 du corps 22, ainsi que sur les parois des puits de connexion 74, 78.

Cette couche de matière conductrice est gravée de manière à former les plages conductrices 28 sur la face supérieure 26 du corps 22 et une série de pistes conductrices 86 sur la face inférieure 50 du corps 22.

Au cours d'une troisième étape, qui est illustrée par la figure 6, le logement 32 est usiné dans la face supérieure 26 du corps 22.

Au cours d'une troisième étape, qui est illustrée par la figure 7, les plots de raccordement 36 sont formés par dépôt d'un « amas » de colle conductrice 80 dans les puits de connexion 78 associés de la paroi de raccordement 34.

On obtient alors l'adaptateur 10 qui est représenté sur la figure 3.

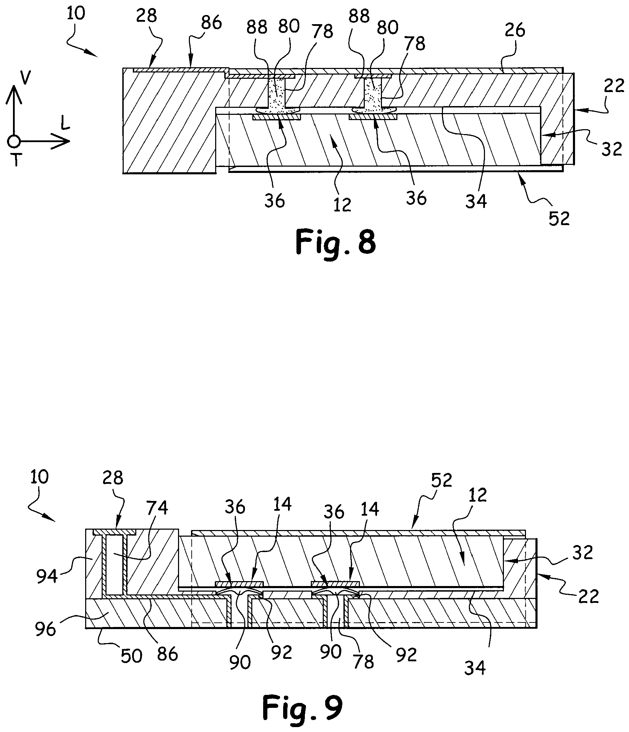

Selon un troisième mode de réalisation de l'invention, qui est représenté sur la figure 8 et qui est similaire au deuxième mode de réalisation, les pistes conductrices 86 sont agencées sur la face principale supérieure 26 du corps 22, et le logement 32 débouche dans la face principale inférieure 50 du corps 22.

Dans ce mode de réalisation, seuls les plots de raccordement 36 comportent des puits de connexion 78 associés.

L'ouverture supérieure de chaque puits de connexion 78 est ici bouchée par la portion d'extrémité 88 d'une piste conductrice 86, de manière à faciliter le remplissage du puits de connexion 78 avec de la colle conductrice 80 formant un plot de raccordement 36 dans le logement 32.

Les parois internes des puits de connexion 78 ne sont pas revêtues de matière conductrice, de sorte que chaque plot de raccordement 36 est lié électriquement avec la piste conductrice 86 associée par contact entre la colle conductrice 80 et la portion d'extrémité 88 de la piste 86 qui bouche l'ouverture supérieure du puits 78.

Selon un quatrième mode de réalisation de l'invention, qui est représenté sur la figure 9 et qui est similaire au deuxième mode de réalisation, les plots de raccordement 36 sont des dômes métalliques 90 agencés dans des cavités complémentaires 92 réalisées dans la face de raccordement 34 du logement 32.

Les pistes conductrices 86, qui relient électriquement les dômes métalliques 90 avec les plages conductrices 28 correspondantes, sont ici agencées sur plusieurs couches, ici deux couches.

Le corps 22 de l'adaptateur 10 est donc réalisé sous la forme de deux couches de plastique 94, 96 superposées verticalement, conformément à la technologie utilisée pour réaliser des cartes à puces à support du type « stratifiées ».

Une première partie des plots de raccordement 36 est reliée aux plages conductrices 28 correspondantes par une première série S1 de pistes conductrices 86 qui sont agencées entre les deux couches de plastique 94, 96, conformément à l'exemple représenté sur la figure 9.

On remarque que pour cette première série S1 de pistes conductrices 86, les puits de connexion 74 associés aux plages conductrices 28 n'a pas besoin de traverser la couche inférieure 96 du corps 22.

Les pistes conductrices 86 de cette première série S1 s'étendent ici jusque dans le fond de chaque cavité 92 associée à un dôme métallique 90.

Une seconde partie des plots de raccordement 36 est reliée aux plages conductrices 28 correspondantes par une seconde série S2 de pistes conductrices 86 qui sont agencées sur la face principale inférieure 50 du corps 22, conformément au deuxième mode de réalisation représenté sur la figure 3. Cette seconde série S2 de pistes conductrices 86 n'est pas représentée sur la figure 9.

Pour cette seconde série S2 de pistes conductrices 86, les puits de connexion 74 associés aux plages conductrices 28 doivent traverser les deux couches 94, 96 du corps 22, et chaque dôme métallique 90 comporte un puits de connexion 78 qui s'étend verticalement entre la cavité 92 associée et la face principale inférieure 50 du corps 22.

## Revendications

1. Adaptateur (10) pour la connexion d'une mini-carte (12) à un connecteur principal pour carte à mémoire électronique, la mini-carte (12) comportant des pistes de contact (14) en surface, ledit adaptateur (10) comprenant un corps principal avec deux faces principales externes (26, 50) opposées l'une de l'autre
- un logement (32) de réception de la mini-carte (12),
- une paroi isolante (34) ou plusieurs couches (94, 96) superposées s'étendant entre une surface interne du logement et une desdites faces principale externes (50),
- des plots de raccordement (36) aux contacts électriques (14) de la mini-carte, en saillie dans le logement au-delà de ladite surface interne pour connecter lesdites pistes de la mini-carte quand elle est insérée dans ledit logement,
**caractérisé en ce qu'**il comprend en outre des lames métalliques (42) agencées à l'intérieur de ladite paroi (34) ou des pistes conductrices (86) agencées sur une surface externe de ladite paroi (34) ou sur une des couches superposées (94, 96), lesdites lames ou lesdites pistes conductrices s'étendant chacune respectivement et directement entre un des plots de raccordement (36) et un contact électrique (14) associé.

2. Adaptateur selon la revendication précédente, **caractérisé en ce qu'**il comporte un capot mobile (52) qui est susceptible d'occuper une position dans laquelle il ferme au moins partiellement le logement (32) en maintenant la mini-carte (12) en position de raccordement électrique dans le logement (32) et en rigidifiant la structure globale de l'adaptateur (10).

3. Adaptateur (10) selon la revendication précédente, **caractérisé en ce que** le capot (52) est monté à coulissement longitudinal sur le corps principal (22).

4. Adaptateur (10) selon la revendication précédente, **caractérisé en ce que** le capot (52) a globalement la forme d'un profilé en U renversé comportant une plaque principale transversale (54) et deux ailes latérales longitudinales (56, 58), et **en ce que** chaque aile latérale (56, 58) est munie, à son extrémité libre, d'un retour (64, 66) qui vient en appui contre une portion de la face (50) en vis-à-vis du corps (22).

5. Adaptateur (10) selon la revendication 1, **caractérisé en ce que** le capot (52) comporte une plaque principale transversale (54) et **en ce que** le capot (52) est monté sur le corps par emboîtement.

6. Adaptateur (10) selon l'une des revendications 4 ou 5, **caractérisé en ce que** la plaque principale (54) du capot (52) comporte des moyens, tels que des embossages, pour augmenter sa rigidité longitudinale et/ou transversale.

7. Adaptateur (10) selon l'une quelconque des revendications précédentes, **caractérisé en ce que** le capot (52) est réalisé en métal.

8. Adaptateur (10) selon l'une quelconque des revendications précédentes, **caractérisé en ce que** la face principale supérieure (26) du corps (22) est munie de plages conductrices longitudinales parallèles (28) et **en ce que** le corps (22) est réalisé dans une matière plastique qui est moulée autour de lames conductrices (38), chaque lame (38) comportant un premier tronçon (40) relié électriquement à une plage conductrice (28) et un second tronçon (42) formant un plot de raccordement (36) associé.

9. Adaptateur (10) selon la revendication précédente, **caractérisé en ce que** le premier tronçon (40) de chaque lame conductrice (38) constitue une plage conductrice (28).

10. Adaptateur (10) selon la revendication 8 ou 9, **caractérisé en ce qu'**il comporte des plots de raccordement (36), en regard des pistes de contact (14) de la mini-carte (12), une cavité (46) dans laquelle le second tronçon d'extrémité (42) de chaque lame (38) s'étend globalement longitudinalement, en formant un bossage (48) en saillie à l'intérieur du logement (32) de manière que, lorsqu'une mini-carte (12) est présente dans le logement (32), chaque plot de raccordement (36) soit sollicité élastiquement vers la piste de contact (14) associée pour assurer le raccordement électrique entre eux par contact.

11. Adaptateur (10) selon l'une quelconque des revendications 1 à 5, **caractérisé en ce que** chaque plot de raccordement (36) relie électriquement une piste conductrice (86) associée et **en ce que** chaque piste conductrice (86) relie électriquement une plage conductrice longitudinale (28) associée au plot de raccordement (36).

12. Adaptateur (10) selon la revendication précédente, **caractérisé en ce que** les pistes conductrices (86) sont agencées sur la face principale inférieure (50) du corps (22), et **en ce que** chaque plage conductrice (86) est agencée au droit d'un puits vertical de connexion (74) qui s'étend entre la face principale supérieure (26) et la face principale inférieure (50) du corps (22), et qui contient une matière conductrice (76), de manière que chaque plage conductrice (28) soit reliée électriquement à la piste conductrice (86) associée à travers un puits de connexion (74).

13. Adaptateur (10) selon l'une quelconque des revendications précédentes, **caractérisé en ce que** le corps (22) comporte plusieurs couches (94, 96) superposées verticalement, et **en ce qu'**une série de pistes conductrices (86) est agencée entre deux couches (94, 96).

14. Adaptateur (10) selon l'une quelconque des revendications précédentes, **caractérisé en ce que** les plots de raccordements (36) sont respectivement reliés à une des plages conductrices (28) du corps principal.

15. Adaptateur (10) selon la revendication 1, **caractérisé en ce qu'**il comporte un capot 52 fixé sur le corps 22.

16. Adaptateur (10) selon l'une quelconque des revendications précédentes, **caractérisé en ce que** la mini-carte 12 s'étend en partie à l'extérieur du corps principal de l'adaptateur.

17. Adaptateur (10) selon l'une quelconque des revendications précédentes, **caractérisé en ce que** la mini-carte constitue tout type de support de données.

18. Adaptateur (10) selon l'une quelconque des revendications précédentes, **caractérisé en ce que** la paroi comprend deux couches superposées verticalement.

## Patentansprüche

1. Adapter (10) für die Verbindung einer Minikarte (12) mit einem Hauptstecker für eine elektronische Speicherkarte, wobei die Minikarte (12) Kontaktbahnen (14) an der Oberfläche aufweist, wobei der Adapter (10) einen Hauptkörper mit zwei zueinander entgegengesetzten äußeren Hauptflächen (26, 50) aufweist,
- einen Sitz (32) zur Aufnahme der Minikarte (12),
- eine isolierende Wand (34) oder mehrere übereinander liegende Schichten (94, 96), die sich zwischen einer Innenfläche des Sitzes und einer der äußeren Hauptflächen (50) erstrecken,
- Kontaktstücke (36) für den Anschluss an die elektrischen Kontakte (14) der Minikarte, die über die Innenfläche hinaus in den Sitz ragen, um die Bahnen der Minikarte zu verbinden, wenn diese in den Sitz eingesetzt ist,
**dadurch gekennzeichnet, dass** er ferner metallische Zungen (42), die im Inneren der Wand (34) angeordnet sind, oder Leiterbahnen (86) aufweist, die auf einer Außenfläche der Wand (34) oder auf einer der übereinander liegenden Schichten (94, 96) angeordnet sind, wobei sich jede der Zungen oder Leiterbahnen jeweils direkt zwischen einem der Anschlusskontaktstücke (36) und einem dazugehörigen elektrischen Kontakt (14) erstreckt.

2. Adapter nach dem vorhergehenden Anspruch, **dadurch gekennzeichnet, dass** er eine bewegliche Abdeckung (52) aufweist, die eine Position einnehmen kann, in der sie den Sitz (32) zumindest teilweise verschließt und dabei die Minikarte (12) in der Position des elektrischen Anschlusses in dem Sitz (32) hält und die Gesamtstruktur des Adapters (10) versteift.

3. Adapter (10) nach dem vorhergehenden Anspruch, **dadurch gekennzeichnet, dass** die Abdeckung (52) in Längsrichtung gleitend am Hauptkörper (22) angebracht ist.

4. Adapter (10) nach dem vorhergehenden Anspruch, **dadurch gekennzeichnet, dass** die Abdeckung (52) insgesamt die Gestalt eines Profils in Form eines umgekehrten U hat, das eine querverlaufende Hauptplatte (54) und zwei längsverlaufende Seitenflügel (56, 58) umfasst, und jeder Seitenflügel (56, 58) an seinem freien Ende mit einem Rücksprung (64, 66) versehen ist, der an einem Abschnitt der gegenüberliegenden Fläche (50) des Körpers (22) in Anlage gelangt.

5. Adapter (10) nach Anspruch 1, **dadurch gekennzeichnet, dass** die Abdeckung (52) eine querverlaufende Hauptplatte (54) umfasst und die Abdeckung (52) durch Aufstecken am Körper angebracht ist.

6. Adapter (10) nach einem der Ansprüche 4 oder 5, **dadurch gekennzeichnet, dass** die Hauptplatte (54) der Abdeckung (52) Mittel wie Prägungen aufweist, um ihre Steifheit in Längsrichtung und/oder in Querrichtung zu erhöhen.

7. Adapter (10) nach einem der vorhergehenden Ansprüche, **dadurch gekennzeichnet, dass** die Abdeckung (52) aus Metall besteht.

8. Adapter (10) nach einem der vorhergehenden Ansprüche, **dadurch gekennzeichnet, dass** die obere Hauptfläche (26) des Körpers (22) mit längsverlaufenden parallelen Leitbereichen (28) versehen ist und der Körper (22) aus einem Kunststoffmaterial besteht, das um Leitzungen (38) herum gegossen ist, wobei jede Zunge (38) einen ersten Abschnitt (40), der elektrisch mit einem Leitbereich (28) verbunden ist, und einen zweiten Abschnitt (42), der ein dazugehöriges Anschlusskontaktstück (36) bildet, umfasst.

9. Adapter (10) nach dem vorhergehenden Anspruch, **dadurch gekennzeichnet, dass** der erste Abschnitt (40) jeder Leitzunge (38) einen Leitbereich (28) bildet.

10. Adapter (10) nach Anspruch 8 oder 9, **dadurch gekennzeichnet, dass** er Anschlusskontaktstücke (36) gegenüber den Kontaktbahnen (14) der Minikarte (12) und einen Hohlraum (46) aufweist, in dem sich der zweite Endabschnitt (42) jeder Zunge (38) insgesamt in Längsrichtung erstreckt und dabei eine Erhebung (48) bildet, die im Inneren des Sitzes (32) hervorsteht, so dass jedes Anschlusskontaktstück (36) elastisch zur dazugehörigen Kontaktbahn (14) beaufschlagt wird, wenn sich eine Minikarte (12) im Sitz (32) befindet, um den elektrischen Anschluss zwischen ihnen durch Kontakt sicherzustellen.

11. Adapter (10) nach einem der Ansprüche 1 bis 5, **dadurch gekennzeichnet, dass** jedes Anschlusskontaktstück (36) eine dazugehörige Leiterbahn (86) elektrisch anbindet und jede Leiterbahn (86) einen dazugehörigen längsverlaufenden Leitbereich (28) mit dem Anschlusskontaktstück (36) elektrisch verbindet.

12. Adapter (10) nach dem vorhergehenden Anspruch, **dadurch gekennzeichnet, dass** die Leiterbahnen (86) an der unteren Hauptfläche (50) des Körpers (22) angeordnet sind und jeder Leitbereich (86) senkrecht zu einer senkrechten Verbindungsmulde (74) angeordnet ist, die sich zwischen der oberen Hauptfläche (26) und der unteren Hauptfläche (50) des Körpers (22) erstreckt und ein leitendes Material (76) enthält, so dass jeder Leitbereich (28) durch eine Verbindungsmulde (74) mit der dazugehörigen Leiterbahn (86) elektrisch verbunden ist.

13. Adapter (10) nach einem der vorhergehenden Ansprüche, **dadurch gekennzeichnet, dass** der Körper (22) mehrere senkrecht übereinander liegende Schichten (94, 96) aufweist und zwischen zwei Schichten (94, 96) eine Reihe von Leiterbahnen (86) angeordnet ist.

14. Adapter (10) nach einem der vorhergehenden Ansprüche, **dadurch gekennzeichnet, dass** die Anschlusskontaktstücke (36) jeweils mit einem Leitbereich (28) des Hauptkörpers verbunden sind.

15. Adapter (10) nach Anspruch 1, **dadurch gekennzeichnet, dass** er eine am Körper (22) befestigte Abdeckung (52) aufweist.

16. Adapter (10) nach einem der vorhergehenden Ansprüche, **dadurch gekennzeichnet, dass** sich die Minikarte (12) teilweise außerhalb des Hauptkörpers des Adapters erstreckt.

17. Adapter (10) nach einem der vorhergehenden Ansprüche, **dadurch gekennzeichnet, dass** die Minikarte jede Art Datenträger darstellt.

18. Adapter (10) nach einem der vorhergehenden Ansprüche, **dadurch gekennzeichnet, dass** die Wand zwei senkrecht übereinander liegende Schichten umfasst.

## Claims

1. Adapter (10) for connecting a mini-card (12) to a main connector for an electronic memory card, the mini-card (12) comprising surface contact tracks (14), said adapter (10) comprising a main body having two mutually opposed main outer faces (26, 50)
- a recess (32) for receiving the mini-card (12),
- an insulating wall (34) or several stacked layers (94, 96) extending between an inner surface of the recess and one of said main outer faces (50),
- contact pads (36) which are intended for connection to the electrical contacts (14) of the mini-card, protruding into the recess beyond said inner surface to connect said tracks of the mini-card when it is inserted in said recess,
**characterized in that** it further comprises metal blades (42) that are arranged inside said wall (34), or conductive tracks (86) that are arranged on an outer surface of said wall (34) or on one of the stacked layers (94, 96), said blades or said conductive tracks extending each respectively and directly between one of the connecting contact pads (36) and an associated electrical contact (14).

2. Adapter according to the preceding claim, **characterized in that** it comprises a movable cover (52) that is capable of occupying a position in which it closes the recess (32) at least in part, while keeping the mini-card (12) in the electrically connected position in the recess (32) and stiffening the overall structure of the adapter (10).

3. Adapter (10) according to the preceding claim, **characterized in that** the cover (52) is mounted on the main body (22) so as to slide longitudinally.

4. Adapter (10) according to the preceding claim, **characterized in that** the overall shape of the cover (52) is an inverted U-profile comprising a main transverse plate (54) and two lateral longitudinal flanges (56, 58), and **in that** each lateral flange (56, 58) is provided, at the free end thereof, with a return (64, 66) that comes against a portion of the face (50) opposite the body (22).

5. Adapter (10) according to claim 1, **characterized in that** the cover (52) comprises a main transverse plate (54), and **in that** the cover (52) is mounted on the body by means of nesting.

6. Adapter (10) according to either claim 4 or claim 5, **characterized in that** the main plate (54) of the cover (52) comprises means, such as embossings, for increasing the longitudinal and/or transverse rigidity thereof.

7. Adapter (10) according to any of the preceding claims, **characterized in that** the cover (52) is made of metal.

8. Adapter (10) according to any of the preceding claims, **characterized in that** the upper main face (26) of the body (22) is provided with parallel longitudinal conductive pads (28), and **in that** the body (22) is made of a plastics material which is molded around conductive blades (38), each blade (38) comprising a first portion (40) that is electrically connected to a conductive pad (28) and a second portion (42) that forms an associated connecting contact pad (36).

9. Adapter (10) according to the preceding claim, **characterized in that** the first portion (40) of each conductive blade (38) forms a conductive pad (28).

10. Adapter (10) according to either claim 8 or claim 9, **characterized in that** it comprises connecting contact pads (36) that are opposite the contact tracks (14) of the mini card (12), a cavity (46) into which the second end portion (42) of each blade (38) extends in a generally longitudinal manner so as to form a boss (48) that protrudes into the recess (32) such that, when a mini card (12) is present in the recess (32), each connecting contact pad (36) is resiliently biased towards the associated contact tracks (14) in order to ensure an electrical connection between them by means of contact.

11. Adapter (10) according to any of claims 1 to 5, **characterized in that** each connecting contact pad (36) electrically connects an associated conductive track (86), and **in that** each conductive track (86) electrically connects to a longitudinal conductive pad (28) associated to the connecting contact pad (36).

12. Adapter (10) according to the preceding claim, **characterized in that** the conductive tracks (86) are arranged on the lower main face (50) of the body (22), and **in that** each conductive track (86) is arranged to the right of a vertical connection well (74) which extends between the upper main face (26) and the lower main face (50) of the body (22) and which contains a conductive material (76), such that each conductive pad (28) is electrically connected to the associated conductive track (86) across a connection shaft (74).

13. Adapter (10) according to any of the preceding claims, **characterized in that** the body (22) comprises a plurality of vertically stacked layers (94, 96), and **in that** a series of conductive tracks (86) is arranged between two layers (94, 96).

14. Adapter (10) according to any of the preceding claims, **characterized in that** the connecting contact pads (36) are each respectively connected to one of the conductive pads (28) of the main body.

15. Adapter (10) according to claim 1, **characterized in that** it comprises a cover 52 that is fitted to the body 22.

16. Adapter (10) according to any of the preceding claims, **characterized in that** the mini-card 12 extends in part outside the main body of the adapter.

17. Adapter (10) according to any of the preceding claims, **characterized in that** the mini-card forms any type of data medium.

18. Adapter (10) according to any of the preceding claims, **characterized in that** the wall comprises two vertically stacked layers.
